# EUROPEAN PATENT SPECIFICATION

(11) **EP 3 448 099 B1**
(45) Date of publication and mention of the grant of the patent: **22.07.2020**
(21) Application number: 16900796.0
(22) Date of filing: 03.05.2016
(51) Int. Cl.: H04W 64/00, H04L 27/26, H04W 72/04

(54) **ALLOCATION OF REFERENCE SIGNALS TO UNOCCUPIED RESOURCE ELEMENTS**
ZUWEISUNG VON REFERENZSIGNALEN ZU UNBESETZTEN RESOURCENELEMENTEN
ATTRIBUTION DE SIGNAUX DE RÉFÉRENCE À DES ÉLÉMENTS DE RESOURCE NON OCCUPÉS

(43) Date of publication of application: 27.02.2019
(73) Proprietor: Huawei Technologies Co., Ltd., Longgang District Shenzhen, Guangdong 518129 (CN)
(72) Inventor: XUE, Jiantao, Shenzhen, Guangdong 518129 (CN); SI, Ye, Shenzhen, Guangdong 518129 (CN); LI, Anjian, Shenzhen, Guangdong 518129 (CN); GAO, Yuan, Shenzhen, Guangdong 518129 (CN)
(74) Representative: Thun, Clemens
(86) International application number: PCT/CN2016/080903
(87) International publication number: WO 2017/190274

(56) References cited:
- WO-A1-2010/090776
- CN-A- 101 594 336
- CN-A- 102 449 501
- CN-A- 102 648 422
- CN-A- 104 010 363
- US-A1- 2010 322 184
- US-A1- 2011 105 144
- INTEL CORPORATION: "Remaining details and simulation results", 3GPP DRAFT; R4-136198 - INTEL - EPDCCH DEMODULATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. San Francisco, CA, US; 20131111 - 20131115 12 November 2013 (2013-11-12), XP050739209, Retrieved from the Internet: URL:http://www.3gpp.org/ftp/Meetings_3GPP_ SYNC/RAN/RAN4/Docs/ [retrieved on 2013-11-12]

## Description

### TECHNICAL FIELD

This application relates to the wireless communications field, and in particular, to a resource allocation method, a network-side device, and a terminal device.

### BACKGROUND

With development of communications services, a positioning service plays an important role as an indispensable part of mobile communications and personal communications services. The positioning service is a value-added service for obtaining location information (longitude and latitude coordinates) of a mobile terminal user through a network of a telecommunications mobile operator, and can provide a corresponding service for a user under support of an electronic map platform. In recent years, target positioning has aroused much research and attention in the industry due to potential important application of the target positioning and an increasing requirement of people for the positioning service. Booming mobile communications technologies further drive rapid progress of existing positioning technologies and proposal of new positioning technologies.

In a user equipment UE positioning algorithm applied in LTE (Long Term Evolution, Long Term Evolution), a user location is usually estimated by using characteristic parameters of a radio wave propagation signal between UE and a network side, and based on a related positioning algorithm. The characteristic parameters may include signal field strength, a signal time difference of arrival, a signal azimuth angle of arrival, and the like.

Positioning precision is a most important factor in the positioning service. However, existing positioning reference signal transmission is easily affected by conditions such as bandwidth and interference, and therefore positioning precision is not high. Therefore, for a current status of a communications system, a network-based terminal device positioning technology needs to be provided, to improve positioning precision of a terminal device.

WO 2010/090776 A1 refers to a new reference signal, called the TDOA-RS, used to improve the hearability of neighbor cells in a cellular network that deploys 3GPP EUTRAN (LTE) system, and the TDOA-RS can be transmitted in any resource blocks (RB) for POSCH and/or MBSFN subframe, regardless of whether the latter is on a carrier supporting both PMCH and POSCH or not. Besides the additional TDOA-RS reference signal, an additional synchronization signal (TDOA-sync) may also be included to improve the hearability of neighbor cells.

### SUMMARY

Technical solutions proposed in the present invention describe a resource allocation method used for terminal device positioning, a network-side device, and a terminal device, to improve positioning precision of a terminal device through more effective bandwidth utilization.

This problem is solved by the subject matter of the independent claims. Further implementation forms are provided in the dependent claims.

According to a first aspect, a resource allocation method is provided, including: allocating, by a network-side device, a first resource, where the first resource is used to carry a positioning reference signal, and the positioning reference signal is used to perform positioning on a terminal device; determining, by the network-side device, a first allocation mode of the first resource, where the first allocation mode is configuring the positioning reference signal in all unoccupied locations of the first resource; and sending, by the network-side device, the positioning reference signal on the first resource in the first allocation mode, or receiving, by the network-side device, the positioning reference signal on the first resource in the first allocation mode. According to the foregoing resource allocation method, the first allocation mode is configured for the first resource used to send or receive the reference signal. In this configuration manner, the positioning reference signal can occupy a relatively large amount of resources or time, thereby improving positioning precision of the terminal device.

In a possible design, the network-side device obtains expected positioning quality, and if it is determined that the expected positioning quality is lower than a preset threshold, determines the first allocation mode of the first resource; or the network-side device obtains a positioning precision requirement, and if it is determined that the positioning precision requirement is higher than a preset threshold, determines the first allocation mode of the first resource. It is determined, based on the expected positioning quality and/or the positioning precision requirement, whether to use the first allocation mode, so as to improve bandwidth of the positioning reference signal and further improve positioning precision.

In a possible design, the network-side device determines the first allocation mode of the first resource if the network-side device determines that a time for sending or receiving the positioning reference signal is within a first time segment, or determines that a frequency for sending or receiving the positioning reference signal is within a first frequency band. By configuring the first allocation mode in a time division or frequency division manner, bandwidth utilization efficiency is improved while ensuring positioning precision.

In a possible design, the network-side device generates assistance information. The assistance information is used to indicate the first allocation mode of the first resource. By setting the assistance information, a reference for sending or receiving the positioning reference signal is provided for the terminal device, so that measurement of the positioning reference signal is more accurate, and positioning precision of the terminal device is improved.

In a possible design, the network-side device obtains a measurement result of the positioning reference signal. The measurement result is used to perform positioning on the terminal device. The measurement of the positioning reference signal may be classified into uplink measurement and downlink measurement. The uplink measurement relates to: The terminal device sends an uplink positioning reference signal to the network-side device, and the network-side device measures the positioning reference signal, and uses a measurement result to perform positioning calculation on the terminal device. The downlink measurement relates to: The network-side device sends a downlink positioning reference signal to the terminal device, and the terminal device measures the positioning reference signal, and uses a measurement result to perform positioning calculation on the terminal device. In both the uplink and downlink measurement manners, the measurement result may be obtained by the network-side device, and is used for final positioning calculation.

According to a second aspect, a network-side device is provided. The network-side device has a function of implementing behavior of the network-side device in the foregoing method process. The function may be implemented by hardware. The network-side device includes a processor and a transceiver. The processor is configured to: allocate a first resource, and determine a first allocation mode of the first resource. The first resource is used to carry a positioning reference signal. The positioning reference signal is used to perform positioning on a terminal device. The first allocation mode is configuring the positioning reference signal in all unoccupied locations of the first resource. The transceiver is configured to: send the positioning reference signal on the first resource in the first allocation mode, or receive the positioning reference signal on the first resource in the first allocation mode.

In a possible design, the processor is configured to: obtain expected positioning quality, and if it is determined that the expected positioning quality is lower than a preset threshold, determine the first allocation mode of the first resource; or configured to: obtain a positioning precision requirement, and if it is determined that the positioning precision requirement is higher than a preset threshold, determine the first allocation mode of the first resource.

In a possible design, the processor is configured to determine the first allocation mode of the first resource if it is determined that a time for sending or receiving the positioning reference signal is within a first time segment, or it is determined that a frequency for sending or receiving the positioning reference signal is within a first frequency band.

In a possible design, the processor is configured to generate assistance information. The assistance information is used to indicate the first allocation mode of the first resource. By setting the assistance information, a reference for sending or receiving the positioning reference signal is provided for the terminal device, so that measurement of the positioning reference signal is more accurate, and positioning precision of the terminal device is improved.

In a possible design, the processor obtains a measurement result of the positioning reference signal. The measurement result is used to perform positioning on the terminal device. The measurement of the positioning reference signal may be classified into uplink measurement and downlink measurement. The uplink measurement relates to: The terminal device sends an uplink positioning reference signal to the network-side device, and the processor measures the positioning reference signal, and uses a measurement result to perform positioning calculation on the terminal device. The downlink measurement relates to: The transceiver sends a downlink positioning reference signal to the terminal device, and the terminal device measures the positioning reference signal, and uses a measurement result to perform positioning calculation on the terminal device. In both the uplink and downlink measurement manners, the measurement result may be obtained by the processor, and is used for final positioning calculation.

According to a third aspect, another network-side device is provided. The network-side device has a function of implementing behavior of the network-side device in the foregoing method process. The function may be implemented by hardware in the network-side device executing corresponding software, or may be implemented by one or more units that are corresponding to the foregoing function and that are included in hardware or software.

According to a fourth aspect, a resource allocation method is provided, including:
receiving, by a terminal device, assistance information, where the assistance information is used to indicate a first allocation mode of a first resource, the first resource is used to carry a positioning reference signal, and the positioning reference signal is used to perform positioning on the terminal device; and sending, by the terminal device, the positioning reference signal on the first resource in the first allocation mode, or receiving, by the terminal device, the positioning reference signal on the first resource in the first allocation mode, and performing measurement to obtain a measurement result, where the first allocation mode is configuring the positioning reference signal in all unoccupied locations of the first resource.

In a possible design, the terminal device respectively sends or receives the positioning reference signal on the first resource in the first allocation mode when the assistance information indicates that a time for sending the positioning reference signal is within a first time segment, or a time for receiving the positioning reference signal is within a first time segment.

In a possible design, the terminal device respectively sends or receives the positioning reference signal on the first resource in the first allocation mode when the assistance information indicates that a frequency for sending the positioning reference signal is within a first frequency band, or a frequency for receiving the positioning reference signal is within a first frequency band.

According to a fifth aspect, a terminal device is provided. The terminal device has a function of implementing behavior of the terminal device in the foregoing method process. The function may be implemented by hardware. The terminal device includes a processor and a transceiver. The processor is configured to obtain assistance information. The assistance information is used to indicate a first allocation mode of a first resource. The first resource is used to carry a positioning reference signal. The positioning reference signal is used to perform positioning on the terminal device. The transceiver is configured to: send the positioning reference signal on the first resource in the first allocation mode, or receive the positioning reference signal on the first resource in the first allocation mode, where the processor measures the received positioning reference signal to obtain a measurement result. The first allocation mode is configuring the positioning reference signal in all unoccupied locations of the first resource.

According to a sixth aspect, another terminal device is provided. The terminal device has a function of implementing behavior of the terminal device in the foregoing method process. The function may be implemented by hardware in the terminal device executing corresponding software, or may be implemented by one or more units that are corresponding to the foregoing function and that are included in hardware or software.

According to a seventh aspect, a resource allocation method is provided, including:
allocating, by a network-side device, a first resource, where the first resource is used to carry a positioning reference signal, and the positioning reference signal is used to perform positioning on a terminal device; determining, by the network-side device, an allocation mode of the first resource, where the allocation mode includes a first allocation mode and a second allocation mode, the first allocation mode is configuring the positioning reference signal in all unoccupied locations of the first resource, and the second allocation mode is configuring the positioning reference signal in some unoccupied locations of the first resource; and under a first condition, sending, by the network-side device, the positioning reference signal on the first resource in the first allocation mode, or receiving, by the network-side device, the positioning reference signal on the first resource in the first allocation mode; or under a second condition, sending, by the network-side device, the positioning reference signal on the first resource in the second allocation mode, or receiving, by the network-side device, the positioning reference signal on the first resource in the second allocation mode. Selection and coordination are performed on the first allocation mode or the second allocation mode by using a specific condition. This implements on-demand allocation of the first resource. The positioning reference signal is scheduled more properly and efficiently while ensuring positioning precision of the terminal device.

In a possible design, the first condition is: a time for sending or receiving the positioning reference signal by the network-side device is within a first time segment; and the second condition is: a time for sending or receiving the positioning reference signal by the network-side device is within a second time segment.

In a possible design, the first condition is: a frequency for sending or receiving the positioning reference signal by the network-side device is within a first frequency band; and the second condition is: a frequency for sending or receiving the positioning reference signal by the network-side device is within a second frequency band.

In a possible design, the network-side device generates assistance information. The assistance information is used to indicate the first allocation mode or the second allocation mode of the first resource.

According to an eighth aspect, a network-side device is provided. The network-side device has a function of implementing behavior of the network-side device in the foregoing method process. The function may be implemented by hardware. The network-side device includes a processor and a transceiver. The processor is configured to: allocate a first resource, and determine an allocation mode of the first resource based on a first condition or a second condition. The first resource is used to carry a positioning reference signal. The positioning reference signal is used to perform positioning on a terminal device. The allocation mode includes a first allocation mode and a second allocation mode, the first allocation mode is configuring the positioning reference signal in all unoccupied locations of the first resource. The second allocation mode is configuring the positioning reference signal in some unoccupied locations of the first resource. The transceiver is configured to: under the first condition, send the positioning reference signal on the first resource in the first allocation mode, or receive the positioning reference signal on the first resource in the first allocation mode; or under the second condition, send the positioning reference signal on the first resource in the second allocation mode, or receive the positioning reference signal on the first resource in the second allocation mode.

According to a ninth aspect, another network-side device is provided. The network-side device has a function of implementing behavior of the network-side device in the foregoing method process. The function may be implemented by hardware in the network-side device executing corresponding software, or may be implemented by one or more units that are corresponding to the foregoing function and that are included in hardware or software.

According to a tenth aspect, a resource allocation method is provided, including:
receiving, by a terminal device, assistance information, where the assistance information is used to indicate an allocation mode of a first resource, the first resource is used to carry a positioning reference signal, the positioning reference signal is used to perform positioning on the terminal device, the allocation mode includes a first allocation mode and a second allocation mode, the first allocation mode is configuring the positioning reference signal in all unoccupied locations of the first resource, and the second allocation mode is configuring the positioning reference signal in some unoccupied locations of the first resource; and under a first condition, sending, by the terminal device, the positioning reference signal on the first resource in the first allocation mode, or receiving, by the terminal device, the positioning reference signal on the first resource in the first allocation mode; or under a second condition, sending, by the terminal device, the positioning reference signal on the first resource in the second allocation mode, or receiving, by the terminal device, the positioning reference signal on the first resource in the second allocation mode.

In a possible design, the first condition is: a time for sending or receiving the positioning reference signal by the terminal device is within a first time segment; and the second condition is: a time for sending or receiving the positioning reference signal by the terminal device is within a second time segment.

In a possible design, the first condition is: a frequency for sending or receiving the positioning reference signal by the terminal device is within a first frequency band; and the second condition is: a frequency for sending or receiving the positioning reference signal by the terminal device is within a second frequency band.

According to an eleventh aspect, a terminal device is provided. The terminal device has a function of implementing behavior of the terminal device in the foregoing method process. The function may be implemented by hardware. The terminal device includes a processor and a transceiver. The processor is configured to obtain assistance information. The assistance information is used to indicate an allocation mode of a first resource. The first resource is used to carry a positioning reference signal. The positioning reference signal is used to perform positioning on the terminal device. The allocation mode includes a first allocation mode and a second allocation mode. The first allocation mode is configuring the positioning reference signal in all unoccupied locations of the first resource. The second allocation mode is configuring the positioning reference signal in some unoccupied locations of the first resource. The transceiver is configured to: under a first condition, send the positioning reference signal on the first resource in the first allocation mode, or receive the positioning reference signal on the first resource in the first allocation mode; or under a second condition, send the positioning reference signal on the first resource in the second allocation mode, or receive the positioning reference signal on the first resource in the second allocation mode.

According to a twelfth aspect, another terminal device is provided. The terminal device has a function of implementing behavior of the terminal device in the foregoing method process. The function may be implemented by hardware in the terminal device executing corresponding software, or may be implemented by one or more modules that are corresponding to the foregoing function and that are included in hardware or software.

According to a thirteenth aspect, a resource allocation method is provided, including:
allocating, by a network-side device, a first resource, where the first resource is used to carry a positioning reference signal, and the positioning reference signal is used to perform positioning on a terminal device; determining, by the network-side device, a first allocation mode of the first resource, where the first allocation mode is configuring the positioning reference signal in all unoccupied locations of the first resource; and sending, by the network-side device, the positioning reference signal on the first resource in the first allocation mode, or receiving, by the network-side device, the positioning reference signal on the first resource in the first allocation mode, where first resources allocated by entities that are in the network-side device and that are used to send positioning reference signals in the first allocation mode do not overlap in time or frequency, or first resources allocated by entities that are in the network-side device and that are used to receive positioning reference signals in the first allocation mode do not overlap in time or frequency. By adjusting a resource allocation structure for a positioning reference signal, intra-frequency interference between a plurality of entities that are in the network-side device and that are used to send or receive a positioning reference signal can be effectively eliminated, and a positioning error is finally reduced.

According to a fourteenth aspect, a resource allocation method is provided, including:
receiving, by a terminal device, a plurality of pieces of assistance information, where each piece of assistance information is corresponding to each entity that is in a network-side device and that sends or receives a positioning reference signal in a first allocation mode, the assistance information indicates a first allocation mode corresponding to a first resource of a corresponding entity, the first resource is used to carry a positioning reference signal, and the positioning reference signal is used to perform positioning on the terminal device; and based on the indication of each piece of assistance information, sending, by the terminal device on the first resource in the first allocation mode, the positioning reference signal to the corresponding entity in the network-side device, or receiving, by the terminal device on the first resource in the first allocation mode, the positioning reference signal from the corresponding entity in the network-side device, and performing measurement to obtain a measurement result, where the first allocation mode is configuring the positioning reference signal in all unoccupied locations of the first resource, and first resources corresponding to entities that are in the network-side device and that are used to send positioning reference signals in the first allocation mode do not overlap in time or frequency, or first resources corresponding to entities that are in the network-side device and that are used to receive positioning reference signals in the first allocation mode do not overlap in time or frequency.

In comparison with the prior art, in the solutions provided in the present invention, the allocation mode of the first resource used to transmit the positioning reference signal may be properly configured according to a positioning requirement and/or based on an actual status of the network-side device, and the positioning precision of the terminal device is improved.

### BRIEF DESCRIPTION OF DRAWINGS

The following describes in more details the embodiments of the present invention with reference to accompanying drawings.
FIG. 1 is a schematic diagram of an application scenario of an Observed Time Difference Of Arrival (OTDOA)-based positioning method;
FIG. 2 is a schematic diagram of resource distribution for a positioning reference signal according to an embodiment of the present invention;
FIG. 3 is a schematic diagram of two resource allocation modes for a positioning reference signal according to an embodiment of the present invention;
FIG. 4 is a schematic flowchart of a resource allocation method according to an embodiment of the present invention;
FIG. 5 is a possible schematic structural diagram of a network-side device according to a first embodiment of the present invention;
FIG. 6 is another possible schematic structural diagram of a network-side device according to a first embodiment of the present invention;
FIG. 7 is a possible schematic structural diagram of a terminal device according to a first embodiment of the present invention;
FIG. 8 is another possible schematic structural diagram of a terminal device according to a first embodiment of the present invention;
FIG. 9 is a schematic flowchart of a resource allocation method according to a second embodiment of the present invention;
FIG. 10 is a schematic flowchart of a resource allocation method according to a third embodiment of the present invention;
FIG. 11 is a schematic diagram of a time-division configuration manner for a positioning reference signal according to a third embodiment of the present invention;
FIG. 12 is a schematic diagram of a frequency-division configuration manner for a positioning reference signal according to a third embodiment of the present invention;
FIG. 13 is a schematic flowchart of another resource allocation method according to a third embodiment of the present invention; and
FIG. 14 is a schematic system architecture diagram of a positioning system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

First, in the embodiments of the present invention, uplink transmission and downlink transmission are performed by using a positioning reference signal, to complete network-based positioning reference signal measurement between a terminal device and a network-side device, and a measurement result is finally used to perform positioning calculation on the terminal device. Common LTE technologies include Observed Time Difference Of Arrival (OTDOA), Uplink Time Of Arrival (UTOA), and Uplink Time Difference Of Arrival (UTDOA). The OTDOA implements downlink positioning measurement, and the UTOA or the UTDOA implements uplink positioning measurement.

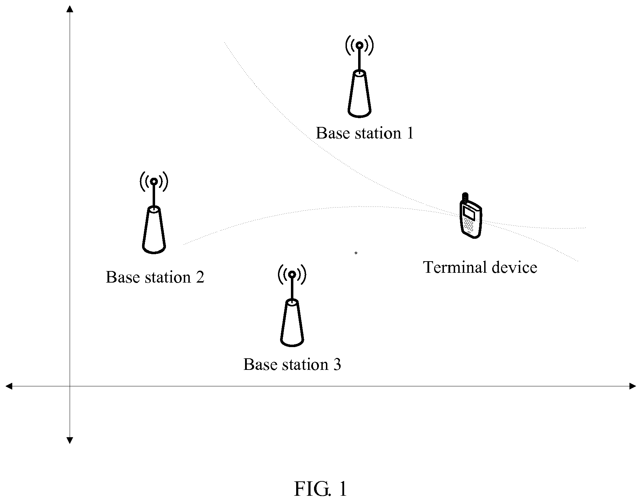

An OTDOA-based positioning method is used as an example. As shown in FIG. 1, an entire positioning system includes base stations 1 to 3, and user equipment UE. An evolved serving mobile location center E-SMLC used for positioning calculation is set on a network side, and may be independently set, or may be set in a base station. In the OTDOA-based positioning method, a time difference of arrival of three different base station signals is detected to determine a location of the user equipment UE. The UE is in a hyperbola whose focuses are two base stations. Coordinates (x, y) of the user equipment UE, location coordinates (xi, yi) of a base station i, a time Ti for sending a signal by the base station i, and a time ti for receiving the signal by the UE are obtained. At least two hyperbolic equations are set up. An intersection of two hyperbolas is two-dimensional location coordinates of the UE. The two-dimensional geographic coordinates of the UE may be obtained by solving an equation set. To achieve accurate positioning, the OTDOA method requires that at least three base stations simultaneously participate in positioning parameter measurement.

In a UTOA/UTDOA-based positioning method, a base station measures an uplink time/time difference of arrival of mobile terminal signals. The UTDOA-based positioning method is similar to the OTDOA-based positioning method. A difference mainly lies in a signal transmission direction. Details about a specific positioning calculation manner are not described herein.

Performance may be affected when UE performs downlink detection on a signal of a neighboring base station by using a common reference signal. Therefore, a positioning reference signal (PRS, Positioning Reference Signal, PRS for short) is introduced in an LTE system, and is specially used by UE to measure a base station signal in a positioning method. A network-side evolved serving mobile location center E-SMLC obtains PRSs of measured cells. A subframe configuration manner is usually: directly performing configuration through operation, administration, and maintenance (Operation Administration and Maintenance, OAM for short). In an OTDOA-based positioning process, UE may obtain a PRS subframe configuration of a measured cell set from the E-SMLC by using an assistance data transmission function of the LTE Positioning Protocol (LTE Positioning Protocol, LPP for short). An assistance data message provided by the LPP may include the following information:

(1) Reference cell information, including information about a reference cell, such as a PCI, an E-CGI, a frequency, and a PRS configuration. A selected reference cell is not limited to a serving cell.

(2) Neighboring cell information list, including information about each neighboring cell, such as a PCI, an E-CGI, a frequency, and a PRS configuration. The neighboring cell information list includes some neighboring cells that are beneficial to measurement and that are selected based on pre-estimation on a location of UE.

Then the E-SMLC requests and obtains location information of the UE, mainly including a related measurement result. The E-SMLC obtains, through calculation, the location information of the UE based on the measurement result of the UE and other inputs.

In an implementation, the UE initiates a positioning request, to request to obtain the location information of the UE. The E-SMLC returns the location information to the UE.

In another implementation, a network side triggers a positioning request and expects to obtain the location information of the UE. For a subsequent processing procedure, refer to the foregoing implementation. Details are not described herein again.

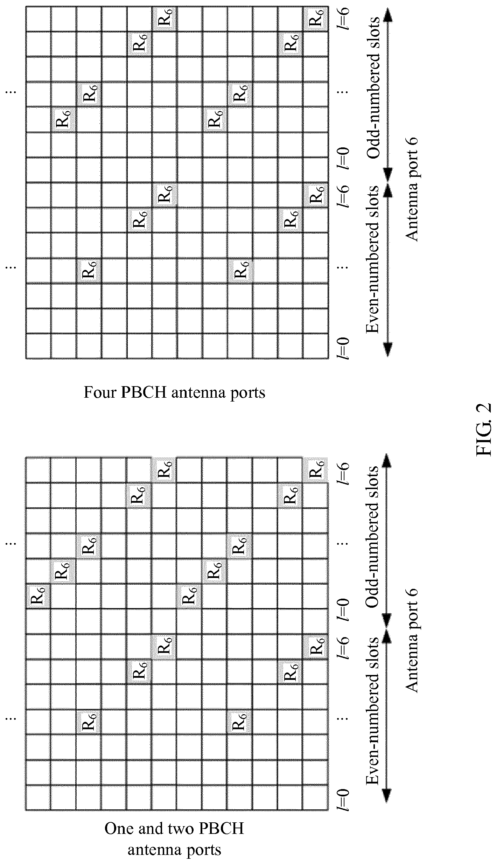

Because the positioning reference signal PRS is specially used for terminal device positioning, a signal format and distribution of the positioning reference signal are especially important in a signal transmission process. The PRS is transmitted in a resource block of a downlink subframe, and is usually formed by a segment of pseudo-random sequence. The PRS is mapped along a diagonal line, covers entire PRS bandwidth as much as possible, and skips an OFDM symbol that has been occupied by a CRS. As shown in FIG. 2, during resource mapping, PRS symbols are inserted with a spacing of six subcarriers in frequency domain. In time domain, a total of eight OFDM symbols are allocated for each positioning subframe to transmit a PRS. *Rₚ* indicates a resource element used to transmit a reference symbol at an antenna port *p*.

In specific positioning calculation, a time and a frequency band in Fourier transformation are inversely proportional. As bandwidth increases, a signal pulse becomes narrower, and an arrival time measurement error becomes smaller. Therefore, spatial positioning precision of a signal is inversely proportional to bandwidth of the signal. For example, a signal pulse width in an ultra-wideband system is at a nanosecond level, bandwidth may reach several GHzs, and centimeter-level positioning precision can be achieved. However, if bandwidth is not sufficiently high, final positioning precision of an existing PRS subframe allocation technology is not very high.

The embodiments of the present invention provide a resource allocation method, so that positioning precision is greatly improved.

It should be noted that, although terminal positioning is performed based on an LTE architecture in the background, a person skilled in the art should know that the embodiments of the present invention are not only applicable to an LTE service, but also applicable to other communications architectures, such as UTMS, 3GPP, and new communication services. The embodiments of the present invention are described by using the LTE service as an example.

A terminal device in the embodiments of the present invention may be a device that provides a user with voice and/or data connectivity, a handheld device with a radio connection function, or another processing device connected to a radio modem. A wireless terminal may communicate with one or more core networks through a radio access network (Radio Access Network, RAN). The wireless terminal may be a mobile terminal, such as a mobile phone (or referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

A network-side device in the embodiments of the present invention is any network-side element different from the terminal device, and may be a base station, an access point, a core network, or an access network element. The base station may be configured to mutually convert a received over-the-air frame and an IP packet and serve as a router between the wireless terminal and a rest portion of the access network. The rest portion of the access network may include an Internet protocol (IP) network. The base station may further coordinate attribute management of the air interface. For example, the base station may be a base transceiver station (BTS, Base Transceiver Station) in GSM or CDMA, or may be a NodeB (NodeB) in WCDMA, or may be an evolved NodeB (eNB or e-NodeB, evolved NodeB) in LTE. This is not limited in this application.

When terminal positioning is performed, a reference signal needs to be transmitted between the network-side device and the terminal device by using a selected segment of resource. The segment of resource is allocated by the network-side device, and may be any segment of time-frequency resource.

Specifically, the selected segment of resource may be a continuous resource location such as a frame, a subframe, a slot (slot), or a resource block; or may be a segment of resource location that is discontinuous in time or frequency.

Specifically, the selected segment of resource is used to carry a communication reference signal for assisting in communication transmission and a positioning reference signal. The communication reference signal for assisting in communication transmission is a known signal used for channel estimation or channel sounding, and includes a cell-specific reference signal CRS, a primary synchronization signal PSS, a secondary synchronization signal SSS, and the like.

For example, in a communication process in a mobile cellular network, the selected segment of resource includes a communication reference signal for assisting in communication and a PRS. The communication reference signal for assisting in communication is a cell-specific reference signal (Cell-specific Reference Signal, CRS for short). The CRS is used to ensure that a terminal can correctly detect a base station and perform channel estimation.

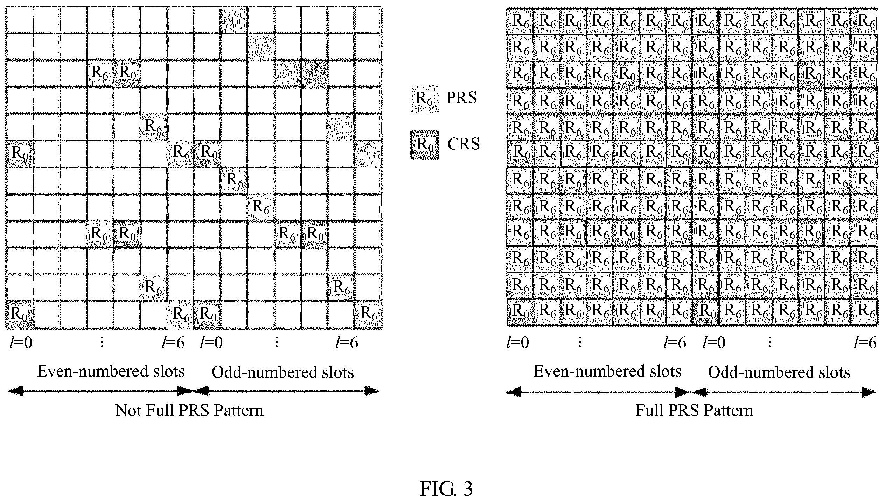

FIG. 3 shows two allocation modes when a selected resource is a resource block RB. Usually, one RB includes several resource elements REs, and is periodically formed by 12 subcarriers in frequency domain and one slot in time domain. For example, the selected resource is used to carry a CRS and a PRS. *R*₀ indicates a resource element used to transmit a reference symbol at a port 0, and is allocated to the CRS. *R*₆ indicates a resource element used to transmit a reference symbol at a port 6, and is allocated to the PRS.

A left side of FIG. 3 indicates an RB distribution structure in a mode of allocating some unoccupied locations in the RB to the PRS when an antenna port uses a normal cyclic prefix (Cyclic Prefix, CP for short). There are unoccupied locations after the CRS and the PRS are configured. This is corresponding to a second allocation mode in a specific embodiment. A right side of FIG. 3 indicates an RB distribution structure in a mode of allocating all unoccupied locations in the RB to the PRS. All the locations in the RB are occupied for configuring the CRS and the PRS. This is corresponding to a first allocation mode in a specific embodiment.

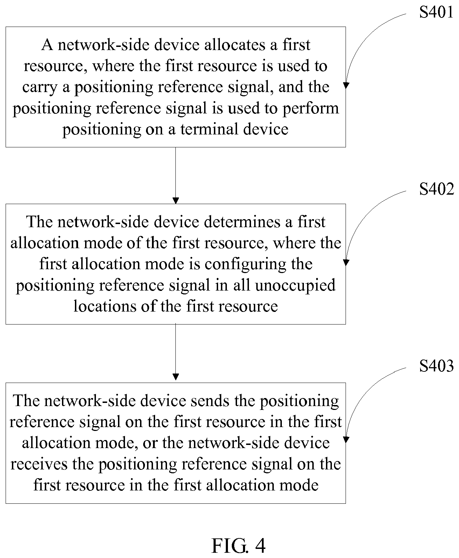

The following describes a technical solution in a first embodiment of the present invention with reference to FIG. 4.

S401: A network-side device allocates a first resource, where the first resource is used to carry a positioning reference signal, and the positioning reference signal is used to perform positioning on a terminal device.

S402: The network-side device determines a first allocation mode of the first resource, where the first allocation mode is configuring the positioning reference signal in all unoccupied locations of the first resource.

S403: The network-side device sends the positioning reference signal on the first resource in the first allocation mode, or the network-side device receives the positioning reference signal on the first resource in the first allocation mode.

The first embodiment of the present invention defines a resource allocation manner, to configure the first allocation mode for the first resource used to send or receive the reference signal. In this configuration manner, the positioning reference signal can occupy a relatively large amount of resources or time, thereby improving positioning precision of the terminal device.

In an optional embodiment, when the network-side device specifically configures the first resource based on the first allocation mode, the network-side device configures the positioning reference signal in all unoccupied locations other than a location allocated to a communication reference signal. Herein, the communication reference signal is a known signal used for channel estimation or channel sounding. For example, in the 3GPP protocol, a communication reference signal is a CRS used by a terminal to perform downlink channel estimation and demodulation and keep synchronous with a base station.

In an optional embodiment, the first resource may alternatively be allocated in a second allocation mode to send or receive the positioning reference signal. The second allocation mode is configuring the positioning reference signal in some unoccupied locations of the first resource.

As shown on the right side in FIG. 3, a PRS is filled in all locations except locations allocated to a CRS, so that the PRS occupies a relatively large amount of resources and time, so as to improve a capability of a positioning signal resisting channel fading, improve measurement signal strength at a signal receive end, reduce signal distortion caused by frequency selective fading, reduce a positioning pilot signal measurement error, and improve positioning precision.

In an optional embodiment, the first allocation mode of the first resource may be evaluated based on expected positioning quality and a positioning precision requirement. The expected positioning quality may be obtained by evaluating a network connection status, a location (for example, coordinates) of the network-side device participating in positioning, and the like. For example, the expected positioning quality may be evaluated depending on whether the network connection status is good, or depending on whether a distance between the network-side device participating in positioning and the terminal device is within a threshold range. The network connection status may be evaluated depending on whether signal quality is good. During signal quality detection, there may be a plurality of indicators for determining, such as reference signal received power (RSRP), reference signal received quality (RSRQ), and a reference signal-signal to interference plus noise ratio (RS-SINR) in an LTE system. Detection on the network connection status and the location of the network-side device participating in positioning may be performed by the network-side device or the terminal device. If the detection is performed by the terminal device, the terminal device needs to feed back a detection result to the network-side device after the terminal device detects a network connection condition such as signal quality of the network-side device, or detects the distance between the location of the network-side device participating in positioning and the terminal device. The network-side device evaluates, by using the detection result, the network connection status or the distance between the network-side device participating in positioning and the terminal device, to obtain the expected positioning quality; and selects an allocation mode. The positioning precision requirement may be determined according to a requirement of a positioning service initiator, and may be specifically determined based on a positioning precision requirement identifier carried in a positioning request received by a network end (such as a positioning server or a base station).

For example, the first allocation mode is used when the expected positioning quality is lower than a preset threshold or the positioning precision requirement is higher than a preset threshold. For example, when a signal to interference plus noise ratio (SINR) is lower than a specific threshold, it is determined that signal sending or receiving is subject to severe interference, bandwidth resources are insufficient, and positioning precision is reduced. In this case, the first allocation mode is used. Alternatively, when the positioning precision requirement is higher than a specific threshold, it is directly determined that the first allocation mode is to be used. When the first allocation mode is used, the positioning reference signal PRS occupies a relatively large amount of bandwidth resources or a relatively long time, impact of bandwidth resource consumption on communication is reduced, and positioning quality and precision are significantly improved.

For another example, the second allocation mode is used when the expected positioning quality is higher than a preset threshold or the positioning precision requirement is lower than a preset threshold. For example, when a signal to interference plus noise ratio (SINR) is higher than a specific threshold, it is determined that signal sending or receiving is stable and is subject to minor interference, bandwidth resources are sufficient, and positioning precision is relatively high. In this case, the second allocation mode may be used to save bandwidth resources. Alternatively, when the positioning precision requirement is lower than a specific threshold, it is directly determined that the second allocation mode is to be used. In the foregoing two cases, the second allocation mode meets measurement and positioning requirements of the positioning reference signal PRS.

For still another example, considering both the expected positioning quality and the positioning precision requirement, a first threshold and a second threshold may be defined for the expected positioning quality and the positioning precision requirement. When the expected positioning quality is lower than the first threshold or the positioning precision requirement is higher than the second threshold, the first allocation mode is used, to reduce impact of bandwidth resource consumption on communication, and ensure positioning quality and precision. If the expected positioning quality is higher than the first threshold and the positioning precision requirement is lower than the second threshold, the network-side device may select the first allocation mode or the second allocation mode depending on an actual situation or according to another requirement. For example, the first allocation mode or the second allocation mode is configured in a time division or frequency division manner. A plurality of factors and emergency situations need to be considered during network communication. Therefore, specific time and frequency allocation is not specifically limited herein. The network-side device may properly perform coordination and configuration.

Specifically, if the network-side device determines that a time for sending or receiving the positioning reference signal is within a first time segment, the network-side device determines the first allocation mode of the first resource, and configures the positioning reference signal in all unoccupied locations of the first resource; or if the network-side device determines that a frequency for sending or receiving the positioning reference signal is within a first time segment, the network-side device determines the first allocation mode of the first resource, and configures the positioning reference signal in all unoccupied locations of the first resource. This time-division or frequency-division mode selection manner can maximally achieve a balance between spectrum resource consumption and positioning precision.

In an optional embodiment, measurement of the positioning reference signal may be classified into uplink measurement and downlink measurement. The uplink measurement relates to: The terminal device sends an uplink positioning reference signal to the network-side device, and the network-side device measures the positioning reference signal, and uses a measurement result to perform positioning calculation on the terminal device. The downlink measurement relates to: The network-side device sends a downlink positioning reference signal to the terminal device, and the terminal device measures the positioning reference signal, and uses a measurement result to perform positioning calculation on the terminal device. In both the uplink and downlink measurement manners, the measurement result may be obtained by the network-side device, and is used for final positioning calculation.

For example, the network-side device sends a positioning reference signal in a downlink subframe based on the determined allocation mode of the first resource. The terminal device receives and measures the positioning reference signal. A measurement result may include a time of arrival (TOA), a time difference of arrival (TDOA), energy, a phase, an angle of arrival, and the like. The terminal device subsequently returns the measurement result to the network-side device, to perform final positioning calculation. In the final positioning calculation, the measurement result may be first converted into a distance between the terminal and a base station. Coordinates of base stations are known on a network side. Therefore, based on a three-point positioning algorithm, specific coordinates of the terminal may be obtained by using distances between the terminal and at least three base stations. Alternatively, in the final calculation, with reference to coordinates of a base station, the measurement result is converted into a distance between the terminal and the base station and an angle of arrival, and coordinates of the terminal are further obtained according to a polar coordinate method. There are many positioning calculation methods for the terminal device. This is not specifically limited herein. The foregoing positioning calculation methods merely represent some implementations.

For another example, the network-side device notifies the terminal device of the determined allocation mode of the first resource. The terminal device sends a positioning reference signal in an uplink subframe. The network-side device receives and measures the positioning reference signal. A measurement result includes a TOA, a TDOA, energy, a phase, an angle of arrival, and the like. The measurement result is used by the network-side device to perform final positioning calculation. For a specific positioning calculation method, refer to the foregoing solution of sending the positioning reference signal in the downlink subframe. Details are not described herein again.

In an optional embodiment, when determining to perform resource configuration by using the first allocation mode, the network-side device sends assistance information before or when the positioning reference signal is sent, to instruct the terminal device to configure the positioning reference signal to be sent or received. The assistance information is used to indicate selection and configurations, such as bandwidth, a basic sequence, a time sequence status, and a detection window, of the positioning reference signal. Objectives of the assistance information are to simplify a receiver design, improve receiving quality, and further improve positioning reference signal measurement precision. The allocation mode of the first resource is determined by the network-side device. Therefore, regardless of whether the terminal device acts as a transmit side or a receive side, the terminal device needs to determine how to configure the positioning reference signal in the corresponding allocation mode, so as to send or receive the positioning reference signal. In this way, the measurement of the positioning reference signal is more accurate. Therefore, based on the foregoing descriptions of determining the first allocation mode and the second allocation mode, if it is determined that the first allocation mode is to be used, the assistance information is specifically used to indicate that the allocation mode of the first resource is the first allocation mode; or if it is determined that the second allocation mode is to be used, the assistance information is specifically used to indicate that the allocation mode of the first resource is the second allocation mode.

In an optional embodiment, a positioning request of the terminal device may be sent by the terminal device, or may be sent by the network-side device according to a positioning requirement of the terminal device.

In another optional embodiment, the network-side device may include at least one base station (or cell), or the network-side device may include at least one base station (or cell), a positioning server (such as a serving mobile location center, SMLC for short), and the like. The network-side device is configured to configure a positioning reference signal, transmit or receive a positioning reference signal, calculate positioning coordinates based on a measurement result, and the like. The foregoing steps may be implemented by a combination of one or more entities of the network-side device. For example, in an OTDOA-based positioning manner, configuring a positioning reference signal is jointly performed by a positioning server and a base station (or cell), transmitting the positioning signal is performed by the base station (or cell), receiving and measuring the positioning signal is performed by a terminal, collecting a measurement result is jointly performed by the base station (or cell) and the positioning server, and final positioning calculation is performed by the positioning server.

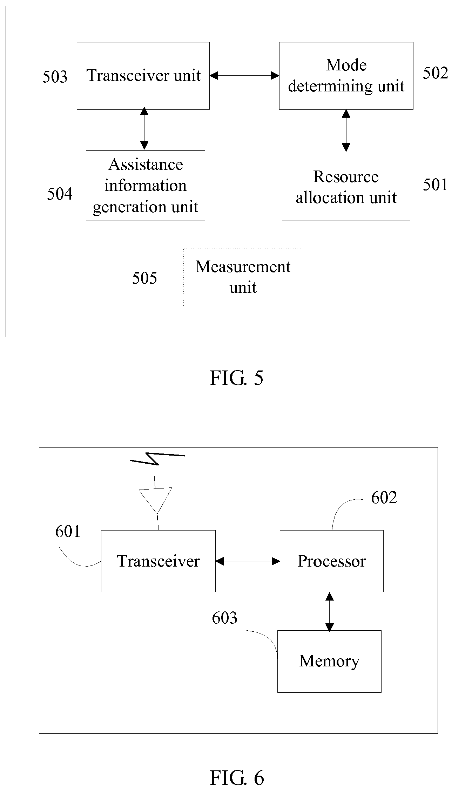

FIG. 5 is a possible schematic structural diagram of a network-side device according to a first embodiment of the present invention.

The network-side device may include a resource allocation unit 501, a mode determining unit 502, and a transceiver unit 503. Certainly, depending on an actual requirement, the terminal device may further include a storage unit (not shown in the figure), and the like.

The resource allocation unit 501 is configured to allocate a first resource. The first resource is used to carry a positioning reference signal. The positioning reference signal is used to perform positioning on a terminal device.

The mode determining unit 502 is configured to determine a first allocation mode of the first resource. The first allocation mode is configuring the positioning reference signal in all unoccupied locations of the first resource.

The transceiver unit 503 is configured to: send the positioning reference signal on the first resource in the first allocation mode, or receive the positioning reference signal on the first resource in the first allocation mode.

In an optional embodiment, the mode determining unit 502 is further configured to: obtain expected positioning quality, and if it is determined that the expected positioning quality is lower than a preset threshold, determine the first allocation mode of the first resource; or further configured to: obtain a positioning precision requirement, and if it is determined that the positioning precision requirement is higher than a preset threshold, determine the first allocation mode of the first resource.

In another optional embodiment, the mode determining unit 502 is further configured to determine the first allocation mode of the first resource if it is determined that a time for sending or receiving the positioning reference signal is within a first time segment, or it is determined that a frequency for sending or receiving the positioning reference signal is within a first frequency band.

In still another optional embodiment, the network-side device further includes an assistance information generation unit 504, configured to generate assistance information. The assistance information is used to indicate the first allocation mode of the first resource.

In still another optional embodiment, the network-side device further includes a measurement unit 505, configured to measure the received positioning reference signal to obtain a measurement result. The measurement result is used to perform positioning on the terminal device.

In still another optional embodiment, the transceiver unit 503 is configured to receive a measurement result. The measurement result is obtained by the terminal device by measuring the positioning reference signal that is received on the first resource in the first allocation mode. The measurement result is used to perform positioning on the terminal device.

The network-side device in this embodiment may be configured to perform the method in the embodiment corresponding to FIG. 4. For specific implementations of determining the resource allocation mode and sending or receiving the positioning reference signal by the network-side device, refer to the descriptions in the method embodiment. Specific functions of the resource allocation unit 501, the mode determining unit 502, and the transceiver unit 503 of the network-side device are corresponding to functions in the embodiment corresponding to FIG. 4. Terms and implementation details in this embodiment are similar to those in the method embodiment.

In this embodiment, the network-side device configures the positioning reference signal in all the unoccupied locations of the first resource used to send or receive the reference signal. In this configuration manner, the positioning reference signal can occupy a relatively large amount of resources or time, thereby improving positioning precision of the terminal device.

FIG. 6 is another possible schematic structural diagram of a network-side device according to a first embodiment of the present invention.

The network-side device may include a transceiver 601 and a processor 602, and depending on an actual requirement, may further include a memory 603, configured to store related data information.

The processor 602 is configured to: allocate a first resource, and determine a first allocation mode of the first resource. The first resource is used to carry a positioning reference signal. The positioning reference signal is used to perform positioning on a terminal device. The first allocation mode is configuring the positioning reference signal in all unoccupied locations of the first resource.

The transceiver 601 is configured to: send the positioning reference signal on the first resource in the first allocation mode, or receive the positioning reference signal on the first resource in the first allocation mode.

In an optional embodiment, the processor 602 is further configured to: obtain expected positioning quality, and if it is determined that the expected positioning quality is lower than a preset threshold, determine the first allocation mode of the first resource; or further configured to: obtain a positioning precision requirement, and if it is determined that the positioning precision requirement is higher than a preset threshold, determine the first allocation mode of the first resource.

In another optional embodiment, the processor 602 is further configured to determine the first allocation mode of the first resource if it is determined that a time for sending or receiving the positioning reference signal is within a first time segment, or it is determined that a frequency for sending or receiving the positioning reference signal is within a first frequency band.

In still another optional embodiment, the processor 602 is further configured to generate assistance information. The assistance information is used to indicate the first allocation mode of the first resource.

In still another optional embodiment, the processor 602 is further configured to obtain a measurement result of the positioning reference signal. The measurement result is used to perform positioning calculation on the terminal device.

It should be noted that, for specific implementations of determining the resource allocation mode and sending or receiving the positioning reference signal by the network-side device, reference may be made to the descriptions in the method embodiment. The network-side device in this embodiment and the method embodiment corresponding to FIG. 4 are based on a same idea. A technical effect brought the network-side device is the same as that of the method embodiment of the present invention. For specific content, refer to the descriptions in the method embodiment corresponding to FIG. 4 in the present invention. Details are not described herein again.

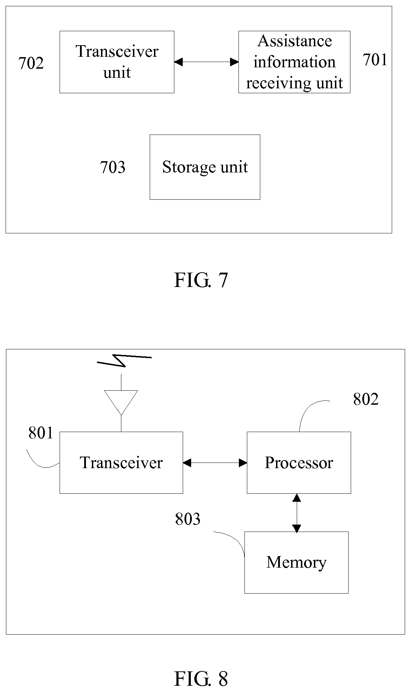

FIG. 7 is a possible schematic structural diagram of a terminal device according to a first embodiment of the present invention.

The terminal device includes an assistance information receiving unit 701 and a transceiver unit 702, and in addition, may further include a storage unit 703.

The assistance information receiving unit 701 is configured to obtain assistance information. The assistance information is used to indicate a first allocation mode of a first resource. The first resource is used to carry a positioning reference signal. The positioning reference signal is used to perform positioning on the terminal device.

The transceiver unit 702 sends the positioning reference signal on the first resource in the first allocation mode, or the terminal device receives the positioning reference signal on the first resource in the first allocation mode, and performs measurement to obtain a measurement result. The first allocation mode is configuring the positioning reference signal in all unoccupied locations of the first resource.

The terminal device in this embodiment may be configured to perform the method corresponding to the terminal device side in the embodiment corresponding to FIG. 4. The terminal device receives the assistance information, and sends or receives the positioning reference signal according to the indication of the assistance information, and may further measure the positioning reference signal, and the like. For specific implementations thereof, refer to the descriptions in the method embodiment. Specific functions of the assistance information receiving unit 701 and the transceiver unit 702 of the terminal device are corresponding to functions on the terminal device side in the method embodiment corresponding to FIG. 4. Terms and implementation details in this embodiment are similar to those in the method embodiment.

FIG. 8 is another possible schematic structural diagram of a terminal device according to a first embodiment of the present invention.

The terminal device includes a transceiver 801 and a processor 802, and depending on an actual requirement, may further include a memory 803, and the like.

The processor 801 is configured to obtain assistance information. The assistance information is used to indicate a first allocation mode of a first resource. The first resource is used to carry a positioning reference signal. The positioning reference signal is used to perform positioning on the terminal device.

The transceiver unit 802 is configured to: send the positioning reference signal on the first resource in the first allocation mode, or receive the positioning reference signal on the first resource in the first allocation mode, where the processor measures the received positioning reference signal to obtain a measurement result. The first allocation mode is configuring the positioning reference signal in all unoccupied locations of the first resource.

The transceiver 802 performs adjustment (such as analog conversion, filtering, amplification, and up-conversion) and sampling and generates an uplink signal. The uplink signal is transmitted to the network-side device in the foregoing embodiment by using an antenna. In downlink, the antenna receives a downlink signal transmitted by the network-side device, and the transceiver 802 is further configured to perform adjustment (such as filtering, amplification, down-conversion, and digitalization) on the signal received by the antenna and perform sampling. The processor 801 performs processing (such as formatting, encoding, and interleaving) on service data and a signaling message that are sent in uplink or downlink, and provides output.

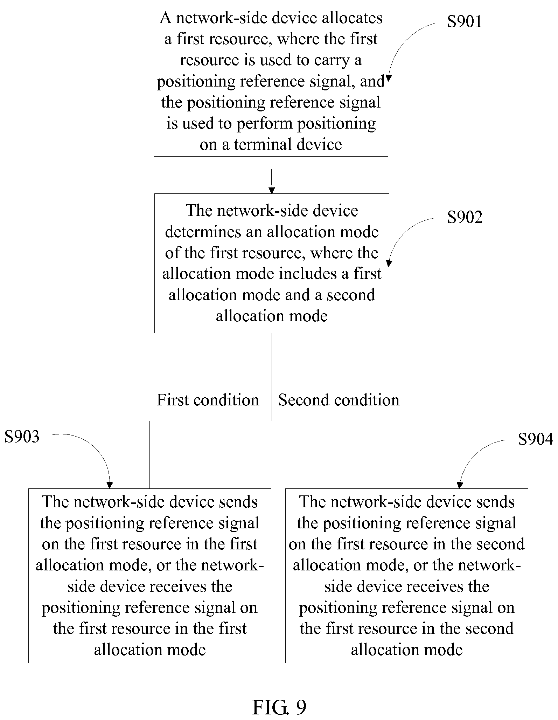

The following describes a technical solution in a second embodiment of the present invention with reference to FIG. 9.

S901: A network-side device allocates a first resource, where the first resource is used to carry a positioning reference signal, and the positioning reference signal is used to perform positioning on a terminal device.

S902: The network-side device determines an allocation mode of the first resource, where the allocation mode includes a first allocation mode and a second allocation mode.

Specifically, the first allocation mode is configuring the positioning reference signal in all unoccupied locations of the first resource, and the second allocation mode is configuring the positioning reference signal in some unoccupied locations of the first resource.

Under a first condition, step S903 is performed: The network-side device sends the positioning reference signal on the first resource in the first allocation mode, or the network-side device receives the positioning reference signal on the first resource in the first allocation mode.

Under a second condition, step S904 is performed: The network-side device sends the positioning reference signal on the first resource in the second allocation mode, or the network-side device receives the positioning reference signal on the first resource in the second allocation mode.

In the technical solution in the second embodiment of the present invention, the allocation mode of the first resource is coordinated, and the first allocation mode or the second allocation mode is selected based on a specific condition, so as to implement on-demand allocation of the first resource, and schedule the positioning reference signal more properly and efficiently. For the first resource, the first allocation mode, and the second allocation mode that are defined in the second embodiment, refer to the definitions in the first embodiment. Details are not described herein again.

In an optional embodiment, the first condition is: a time for sending or receiving the positioning reference signal by the network-side device is within a first time segment; and the second condition is: a time for sending or receiving the positioning reference signal by the network-side device is within a second time segment. This optional embodiment defines a relatively flexible and time-division allocation mode for the first resource.

In another optional embodiment, the first condition is: a frequency for sending or receiving the positioning reference signal by the network-side device is within a first frequency band; and the second condition is: a frequency for sending or receiving the positioning reference signal by the network-side device is within a second frequency band. This optional embodiment defines a relatively flexible and frequency-division allocation mode for the first resource.

Specifically, the network-side device or the terminal device obtains expected positioning quality and a positioning precision requirement. For obtaining the expected positioning quality and the positioning precision requirement, refer to the foregoing descriptions. Details are not described herein again. The network-side device coordinates use of the first allocation mode and the second allocation mode based on the expected positioning quality and according to the positioning precision requirement, and configures sending or receiving of the positioning reference signal on the first resource in the first allocation mode or the second allocation mode in different time segments or frequency bands. This avoids a case in which final positioning precision is relatively poor because a positioning reference signal is configured in a conventional manner when expected positioning quality is not high; or a case in which a positioning reference signal is improperly configured to occupy excessive communication resources when positioning precision meets a requirement.

To implement the technical solution in the second embodiment of the present invention, the present invention provides a possible structure of a network-side device.

The network-side device may include a resource allocation unit, a mode determining unit, and a transceiver unit. Certainly, depending on an actual requirement, the terminal device may further include a storage unit, and the like.

The resource allocation unit is configured to allocate a first resource. The first resource is used to carry a positioning reference signal. The positioning reference signal is used to perform positioning on a terminal device.

The mode determining unit is configured to determine an allocation mode of the first resource. The allocation mode includes a first allocation mode and a second allocation mode. The first allocation mode is configuring the positioning reference signal in all unoccupied locations of the first resource. The second allocation mode is configuring the positioning reference signal in some unoccupied locations of the first resource.

The transceiver unit is configured to: under a first condition, send the positioning reference signal on the first resource in the first allocation mode, or receive the positioning reference signal on the first resource in the first allocation mode; or under a second condition, send the positioning reference signal on the first resource in the second allocation mode, or receive the positioning reference signal on the first resource in the second allocation mode.

In an optional embodiment, the network-side device further includes an assistance information generation unit, configured to generate assistance information. The assistance information is used to indicate the first allocation mode or the second allocation mode of the first resource.

In another optional embodiment, the network-side device further includes a measurement unit, configured to measure the positioning reference signal received in the first allocation mode or the second allocation mode to obtain a measurement result. The measurement result is used to perform positioning on the terminal device.

In another optional embodiment, the transceiver unit is configured to receive a measurement result. The measurement result is obtained by the terminal device by measuring the positioning reference signal that is received on the first resource in the first allocation mode or the second allocation mode. The measurement result is used to perform positioning on the terminal device.

The network-side device in this embodiment may be configured to perform the method in the embodiment corresponding to FIG. 9. For specific implementations of determining the resource allocation mode and sending or receiving the positioning reference signal by the network-side device, refer to the descriptions in the method embodiment corresponding to FIG. 9. Specific functions of the resource allocation unit, the mode determining unit, and the transceiver unit of the network-side device are corresponding to functions in the method embodiment corresponding to FIG. 9. Terms and implementation details in this embodiment are similar to those in the method embodiment.

The network-side device in this embodiment can coordinate the allocation mode of the first resource, and select the first allocation mode or the second allocation mode based on a specific condition, so as to implement on-demand allocation of the first resource, and schedule the positioning reference signal more properly and efficiently.

To implement the technical solution in the second embodiment of the present invention, the present invention provides another possible structure of a network-side device.

The network-side device may include a processor and a transceiver, and depending on an actual requirement, may further include a memory, and the like.

The processor is configured to: allocate a first resource, and determine an allocation mode of the first resource based on a first condition or a second condition. The first resource is used to carry a positioning reference signal. The positioning reference signal is used to perform positioning on a terminal device. The allocation mode includes a first allocation mode and a second allocation mode. The first allocation mode is configuring the positioning reference signal in all unoccupied locations of the first resource. The second allocation mode is configuring the positioning reference signal in some unoccupied locations of the first resource.

The transceiver is configured to: under a first condition, send the positioning reference signal on the first resource in the first allocation mode, or receive the positioning reference signal on the first resource in the first allocation mode; or under a second condition, send the positioning reference signal on the first resource in the second allocation mode, or receive the positioning reference signal on the first resource in the second allocation mode.

In an optional embodiment, the processor is further configured to generate assistance information. The assistance information is used to indicate the first allocation mode or the second allocation mode of the first resource.

In another optional embodiment, the processor is further configured to obtain a measurement result of the positioning reference signal. The measurement result is used to perform positioning calculation on the terminal device.

It should be noted that management and scheduling, such as selection of a positioning parameter and method, determining of the resource allocation mode, use of the assistance information, uplink/downlink positioning measurement scheduling, a quantity of network-side devices, and execution of final positioning calculation, that are related to positioning measurement and that are performed by the network-side device in the second embodiment of the present invention are the same as or similar to those in the first embodiment. There may be a plurality of choices. Specific functions of the units or the apparatuses included in the network-side device are corresponding to functions in the method embodiment corresponding to FIG. 9. For specific content, refer to the descriptions in the method embodiment corresponding to FIG. 9 in the present invention. Details are not described herein again.

To implement the technical solution in the second embodiment of the present invention, the present invention provides a possible structure of a terminal device.

The terminal device includes an assistance information receiving unit and a transceiver unit, and depending on an actual requirement, may further include a storage unit, and the like.

The assistance information receiving unit is configured to receive assistance information. The assistance information is used to indicate an allocation mode of a first resource. The first resource is used to carry a positioning reference signal. The positioning reference signal is used to perform positioning on the terminal device. The allocation mode includes a first allocation mode and a second allocation mode. The first allocation mode is configuring the positioning reference signal in all unoccupied locations of the first resource. The second allocation mode is configuring the positioning reference signal in some unoccupied locations of the first resource.

The transceiver unit is configured to: under a first condition, send the positioning reference signal on the first resource in the first allocation mode, or receive the positioning reference signal on the first resource in the first allocation mode; or under a second condition, send the positioning reference signal on the first resource in the second allocation mode, or receive the positioning reference signal on the first resource in the second allocation mode.

The terminal device in this embodiment may be configured to perform the method corresponding to the terminal device side in the embodiment corresponding to FIG. 9. For specific implementations of receiving the assistance information by the terminal device, sending or receiving the positioning reference signal according to the indication of the assistance information, and possible measurement of the positioning reference signal, refer to the descriptions in the method embodiment. Specific functions of the assistance information receiving unit and the transceiver unit of the terminal device are corresponding to functions on the terminal device side in the method embodiment corresponding to FIG. 9. Terms and implementation details in this embodiment are similar to those in the method embodiment.

To implement the technical solution in the second embodiment of the present invention, the present invention provides another possible structure of a terminal device.

The terminal device includes a processor and a transceiver, and depending on an actual requirement, may further include a memory, and the like.

The processor is configured to obtain assistance information. The assistance information is used to indicate an allocation mode of a first resource. The first resource is used to carry a positioning reference signal. The positioning reference signal is used to perform positioning on the terminal device. The allocation mode includes a first allocation mode and a second allocation mode. The first allocation mode is configuring the positioning reference signal in all unoccupied locations of the first resource. The second allocation mode is configuring the positioning reference signal in some unoccupied locations of the first resource.

The transceiver is configured to:
under a first condition, send the positioning reference signal on the first resource in the first allocation mode, or receive the positioning reference signal on the first resource in the first allocation mode; or
under a second condition, send the positioning reference signal on the first resource in the second allocation mode, or receive the positioning reference signal on the first resource in the second allocation mode.

It should be noted that the terminal device receives the assistance information, and sends or receives the positioning reference signal according to the indication of the assistance information, and may further measure the positioning reference signal. For specific implementations of these, refer to the corresponding descriptions of the method performed by the terminal device in the method embodiment corresponding to FIG. 9. The embodiment of the terminal device and the foregoing method embodiment are based on a same idea. A technical effect brought the terminal device is the same as that of the method embodiment corresponding to FIG. 9 in the present invention. For specific content, refer to the descriptions in the method embodiment corresponding to FIG. 9 in the present invention. Details are not described herein again.

Usually, a plurality of network-side devices are required to perform positioning on a terminal device. Therefore, in the first allocation mode of the first resource, all unoccupied locations of the first resource are configured for the positioning reference signal. As a result, density of the positioning reference signal is relatively large, and interference may easily occur. For example, if a first resource allocated to each network-side device is one subframe, there is a PRS in each of REs that are adjacent in frequency domain and that are included in each subframe. A terminal device receiving positioning reference signals from a plurality of network-side devices is subject to infra-frequency interference.

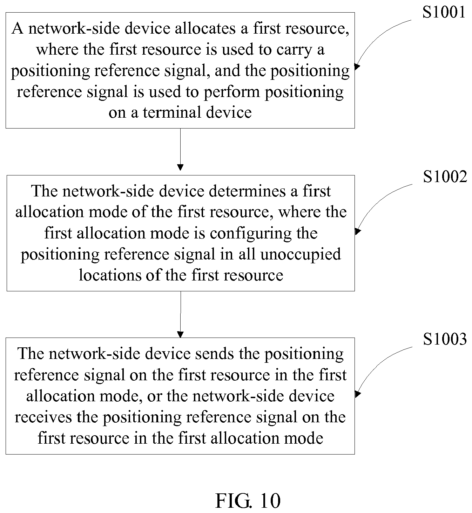

To resolve this problem, a third embodiment of the present invention provides a resource allocation method. The following describes the method with reference to FIG. 10.

S1001: A network-side device allocates a first resource, where the first resource is used to carry a positioning reference signal, and the positioning reference signal is used to perform positioning on a terminal device.

S1002: The network-side device determines a first allocation mode of the first resource, where the first allocation mode is configuring the positioning reference signal in all unoccupied locations of the first resource.

S1003: The network-side device sends the positioning reference signal on the first resource in the first allocation mode, or the network-side device receives the positioning reference signal on the first resource in the first allocation mode.

First resources allocated by entities that are in the network-side device and that are used to send positioning reference signals in the first allocation mode do not overlap in time or frequency, or first resources allocated by entities that are in the network-side device and that are used to receive positioning reference signals in the first allocation mode do not overlap in time or frequency.

The technical solution in the third embodiment of the present invention proposes a new resource allocation method. First resources of entities that are in the network-side device and that are used to send or receive positioning reference signals during terminal device positioning are configured to be not overlapping in time or frequency. This can reduce signal transmission interference between different communications entities in the network-side device, and improve signal transmission efficiency to ensure positioning precision.

In an optional embodiment, the network-side device may include at least one base station (or cell), a positioning server (such as a serving mobile location center, SMLC for short), and the like. The positioning server is configured to: configure a positioning reference signal, calculate positioning coordinates based on a measurement result, and the like. The base station (or cell) is configured to send or receive a positioning reference signal. In a terminal positioning process, first resources allocated by base stations (or cells) participating in positioning do not overlap in time or frequency. Depending on an actual network architecture design requirement, the positioning server (such as the SMLC) may alternatively be integrated in an entity that is in the network-side device and that is used to send or receive a positioning reference signal, for example, a base station controller BSC of a base station (or cell). The positioning server responds to a location request, selects a measurement parameter, selects an allocation mode of a first resource, determines a positioning method, and the like; and obtains a final positioning result through calculation based on a returned measurement result. A response to a positioning request, positioning transmission signal scheduling management, and calculation of a final positioning result are implemented based on information exchange between the network-side device and the terminal device.

For example, in an OTDOA-based positioning manner, an operation of configuring a resource and a positioning reference signal is jointly performed by a positioning server and a base station (or cell), sending a downlink positioning signal is performed by the base station (or cell), receiving and measuring the positioning signal is performed by a terminal device, collecting a measurement result is jointly performed by the base station (or cell) and the positioning server, and final positioning calculation is performed by the positioning server. A first resource used for each base station (or cell) may be allocated in a time division or frequency division manner.

For example, an entity that is in the network-side device and that is used to send or receive a positioning reference signal may be a cell. A plurality of cells participate in terminal device positioning. Each cell sends or receives a positioning reference signal in a first allocation mode of a first resource. In addition, in a terminal device positioning process, first resources corresponding to the cells do not overlap in time or frequency.

A network-side device that is nearby the terminal device and that can be used for positioning is selected. The network-side device includes a plurality of cells. There may be a plurality of cells, for example, six cells (a quantity of cells does not affect final application and implementation of the present invention). Correspondingly, the terminal device has six subframes used for positioning, matching the quantity of cells.

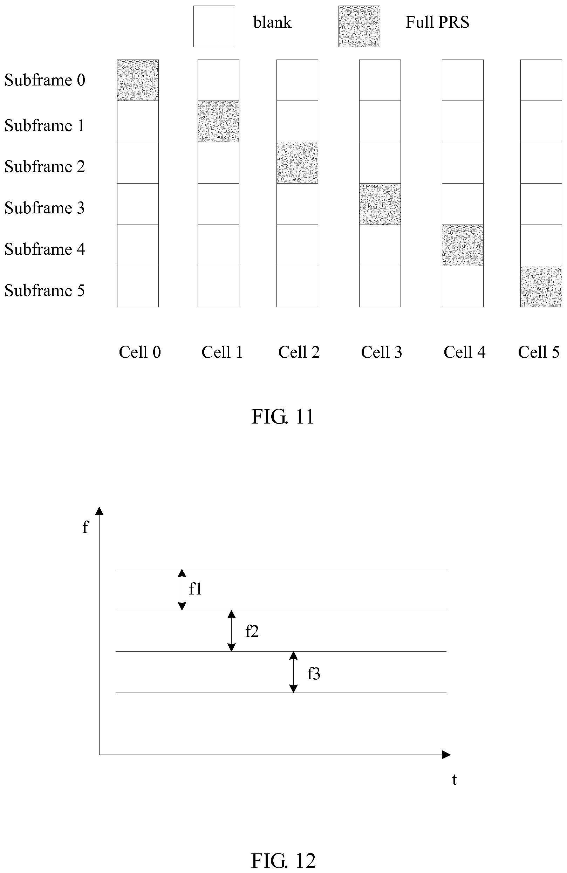

Optionally, in a downlink transmission process of a positioning reference signal, the network-side device may send the positioning reference signal in a time division manner. A first subframe is corresponding to a first cell, and is used to measure a positioning reference signal of the first cell, and so on. Each cell has six subframes used for positioning. It is stipulated that the first subframe of the first cell is a positioning reference signal subframe, and a rest subframe is empty; a second subframe of a second cell is a positioning reference signal subframe, and a rest subframe is empty; a third subframe of a third cell is a positioning reference signal subframe, and a rest subframe is empty; a fourth subframe of a fourth cell is a positioning reference signal subframe, and a rest subframe is empty; a fifth subframe of a fifth cell is a positioning reference signal subframe, and a rest subframe is empty; and a sixth subframe of a sixth cell is a positioning reference signal subframe, and a rest subframe is empty. A subframe setting is shown in FIG. 11. A white block represents an empty subframe, and a gray block represents a positioning reference signal subframe. Different positioning reference signal subframes of one cell are shown in a horizontal direction. In a vertical direction, one subframe is corresponding to different cells. In a transmission time of one frame, the terminal device side may receive positioning reference signals from six cells. Positioning reference signals corresponding to different cells are sent in a time division manner, and do not interfere with each other.

Optionally, in a downlink transmission process of a positioning reference signal, the network-side device may send the positioning reference signal in a frequency division manner. As shown in FIG. 12, at a same time, total bandwidth of a transport channel is divided into a corresponding quantity of subbands: f1, f2, ..., and f6. The subbands are allocated to positioning subframes corresponding to different cells. At a same time, the positioning subframes corresponding to different cells are separately sent to the terminal device side by the cells on corresponding subbands. The terminal device side may simultaneously receive positioning reference signals from six cells. The positioning reference signal subframes corresponding to different cells are sent in a frequency division manner, and do not interfere with each other.

Optionally, in an uplink transmission process of a positioning reference signal, the terminal device may send the positioning reference signal in a time division manner. A first subframe is corresponding to a first cell, and is used to measure a positioning reference signal of the first cell, and so on. Based on a setting of subframes corresponding to different cells, the terminal device may send positioning reference signals to six cells in a time division manner.

Optionally, in an uplink transmission process of a positioning reference signal, the terminal device may send the positioning reference signal in a frequency division manner. At a same time, total bandwidth of a transport channel is divided into a corresponding quantity of subbands: f1, f2, ..., and f6. The subbands are allocated to positioning reference signals corresponding to different cells. At a same time, the terminal device may transmit positioning reference signals to six cells in a frequency division manner.

The positioning reference signals corresponding to different cells are sent or received in the time division or frequency division manner, and do not interfere with each other. Therefore, signal transmission quality and positioning precision are improved.

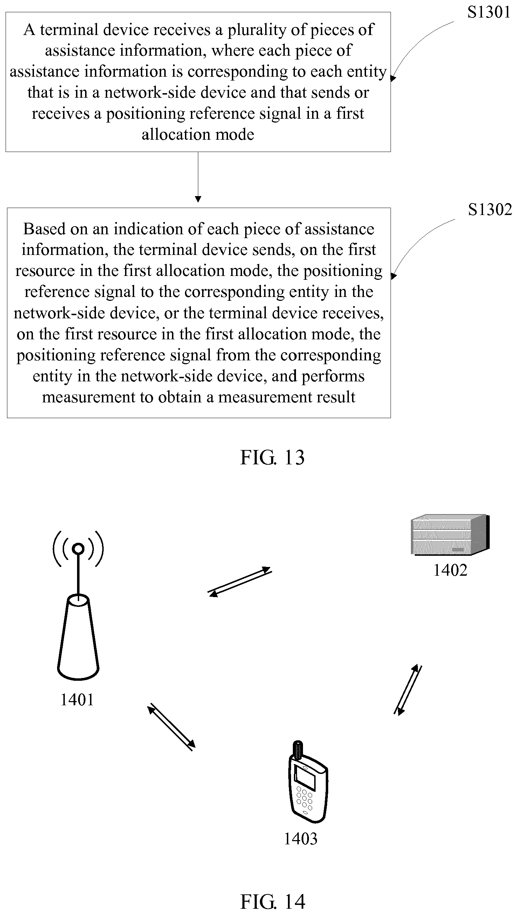

FIG. 13 shows another optional implementation of the third embodiment of the present invention.

S1301: A terminal device receives a plurality of pieces of assistance information, where each piece of assistance information is corresponding to each entity that is in a network-side device and that sends or receives a positioning reference signal in a first allocation mode.

The assistance information indicates a first allocation mode corresponding to a first resource of a corresponding entity. The first resource is used to carry a positioning reference signal. The positioning reference signal is used to perform positioning on the terminal device.

S1302: Based on an indication of each piece of assistance information, the terminal device sends, on the first resource in the first allocation mode, the positioning reference signal to the corresponding entity in the network-side device, or the terminal device receives, on the first resource in the first allocation mode, the positioning reference signal from the corresponding entity in the network-side device, and performs measurement to obtain a measurement result.

The first allocation mode is configuring the positioning reference signal in all unoccupied locations of the first resource. First resources corresponding to entities that are in the network-side device and that are used to send positioning reference signals in the first allocation mode do not overlap in time or frequency, or first resources corresponding to entities that are in the network-side device and that are used to receive positioning reference signals in the first allocation mode do not overlap in time or frequency.

In the third embodiment of the present invention, by adjusting a resource allocation structure for a positioning reference signal, intra-frequency interference between a plurality of entities that are in the network-side device and that are used to send or receive a positioning reference signal can be effectively eliminated, and a positioning error is finally reduced. A person skilled in the art may understand that the adjusting a resource allocation structure for a positioning reference signal in the third embodiment of the present invention may be also applied to the first embodiment and the second embodiment of the present invention. In the first embodiment and the second embodiment, if it is determined that a plurality of entities in the network-side device are used to send or receive positioning reference signals to perform positioning on the terminal device, first resources allocated by entities that are used to send positioning reference signals in the first allocation mode do not overlap in time or frequency, or first resources allocated by entities that are used to receive positioning reference signals in the first allocation mode do not overlap in time or frequency.

The foregoing embodiments mainly describe the solutions provided in the foregoing embodiments of the present invention from a perspective of interaction between the network-side device and the terminal device. It may be understood that both devices that interact with each other include but are not limited to a network-side device such as a base station, a cell, or an access point, and a terminal device such as a mobile terminal. To implement the foregoing functions, the devices include corresponding hardware structures and/or software modules to perform the functions. A person of ordinary skill in the art should easily be aware that, with dereference to the examples described in the embodiments disclosed in this specification, units and algorithm steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

It may be understood that FIG. 5 to FIG. 8 show merely simplified designs of the network-side device and the terminal device. In actual application, the network-side device and the terminal device each may include any quantity of transmitters, receivers, processors, controllers, memories, communications units, and the like. All network-side devices and terminal devices that can implement the technical solutions of the present invention fall within the protection scope of the present invention.

In addition, interaction between the network-side device and the terminal device may further relate to a positioning server used for positioning scheduling and calculation (such as a serving mobile location center SMLC). FIG. 14 shows a system architecture of a positioning system as an example. A network-side device includes a base station 1401. In addition, the network-side device further includes a positioning server 1402. The positioning server 1402 may be integrated in a base station controller BSC to implement a mobile service positioning management function, or may be set in the network-side device but independent of the base station. A terminal device may be a mobile terminal 1403 or the like. The positioning server 1402 is responsible for performing positioning operations, for example, analyzing a network status, determining a positioning method, a first resource, an allocation mode, and performing final positioning calculation. In an uplink positioning measurement process, the mobile terminal 1403 transmits a positioning reference signal in uplink based on the determined first resource and allocation mode. The base station 1401 receives the positioning reference signal, performs analysis and measurement, and sends an obtained measurement result to the positioning server. The positioning server summarizes the measurement result of the base station, and performs positioning on terminal device according to the determined positioning method. In a downlink positioning measurement process, the base station 1401 transmits a positioning reference signal in downlink based on the determined first resource and allocation mode. The mobile terminal 1403 receives the positioning reference signal, performs analysis and measurement, and sends an obtained measurement result to the positioning server. The positioning server summarizes the measurement result of the mobile terminal 1403, and performs positioning on terminal device according to the determined positioning method. The allocation mode of the first resource includes a first allocation mode and a second allocation mode. The first allocation mode is configuring the positioning reference signal in all unoccupied locations of the first resource. The second allocation mode is configuring the positioning reference signal in some unoccupied locations of the first resource. In other words, in this embodiment of the present invention, the terminal device and the base station in the network-side device are merely responsible for sending or receiving uplink and downlink data. The positioning server is responsible for positioning scheduling and management in a unified manner. For example, the positioning server is configured to support steps S401 and S402 in FIG. 4, steps S901 and S902 in FIG. 9, and steps S1001 and S1002 in FIG. 10.

The processor in the embodiments of the present invention may be a central processing unit (CPU), a general-purpose processor, a digital signal processor (DSP), an application-specific integrated circuit (ASIC), a field programmable gate array (FPGA) or another programmable logic device, a transistor logic device, a hardware device, or any combination thereof. The processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor.

A person skilled in the art may know that, for the network-side device and the terminal device, functions of the transmitter, the receiver, and the processor are not limited to a function of assisting in execution of the resource allocation method processes provided in the embodiments of the present invention, and the transmitter, the receiver, and the processor may be further configured to assist in execution of other functions of the terminal device, for example, a basic communication function and execution of various application programs. Details are not described herein.

Method steps described with reference to the content disclosed in the present invention may be implemented by hardware, or may be implemented by a processor by executing a software instruction. The software instruction may be formed by a corresponding software module. The software module may be stored in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an application-specific integrated circuit (ASIC). In addition, the ASIC may be located in the network-side device and the terminal device. Certainly, the processor and the storage medium may alternatively be located in the network-side device and the terminal device as discrete components.

A person skilled in the art should be aware that in the foregoing one or more examples, functions described in the present invention may be implemented by hardware, software, firmware, or any combination thereof. When the functions are implemented by software, the functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another. The storage medium may be any available medium accessible to a general-purpose or dedicated computer.

## Claims

1. A resource allocation method, comprising:
• allocating (S401), by a network-side device, a first resource block, wherein the first resource block is used to carry a positioning reference signal, and the positioning reference signal is used to perform positioning on a terminal device;
• determining (S402), by the network-side device, a first allocation mode of the first resource block, wherein the first allocation mode is configuring the positioning reference signal in all unoccupied resource elements of the first resource block; and
• sending (S403), by the network-side device, the positioning reference signal on the first resource block in the first allocation mode, or receiving (S403), by the network-side device, the positioning reference signal on the first resource block in the first allocation mode.

2. The method according to claim 1, wherein
the determining, by the network-side device, the first allocation mode of the first resource block, wherein the first allocation mode is configuring the positioning reference signal in all unoccupied resource elements of the first resource block comprises:
obtaining, by the network-side device, expected positioning quality, and if the expected positioning quality is lower than a preset threshold, determining the first allocation mode of the first resource block; or
obtaining, by the network-side device, a positioning precision requirement, and if the positioning precision requirement is higher than a preset threshold, determining the first allocation mode of the first resource block.

3. The method according to claim 1, wherein
the determining, by the network-side device, the first allocation mode of the first resource block, wherein the first allocation mode is configuring the positioning reference signal in all unoccupied resource elements of the first resource block comprises:
determining, by the network-side device, the first allocation mode of the first resource block if the network-side device determines that a time for sending or receiving the positioning reference signal is within a first time segment, wherein the first allocation mode is configuring the positioning reference signal in all unoccupied resource elements of the first resource block.

4. The method according to claim 1, wherein
the determining, by the network-side device, the first allocation mode of the first resource block, wherein the first allocation mode is configuring the positioning reference signal in all unoccupied resource elements of the first resource block comprises:
determining, by the network-side device, the first allocation mode of the first resource block if the network-side device determines that a frequency for sending or receiving the positioning reference signal is within a first frequency band, wherein the first allocation mode is configuring the positioning reference signal in all unoccupied resource elements of the first resource block.

5. The method according to any one of claims 1 to 4, further comprising:
generating, by the network-side device, assistance information, wherein the assistance information is used to indicate the first allocation mode of the first resource block.

6. The method according to any one of claims 1 to 5, further comprising:
obtaining, by the network-side device, a measurement result of the positioning reference signal, wherein the measurement result is used to perform positioning on the terminal device.

7. The method according to claim 6, wherein
the obtaining, by the network-side device, the measurement result of the positioning reference signal comprises:
receiving, by the network-side device, the positioning reference signal on the first resource block in the first allocation mode, and measuring the positioning reference signal to obtain the measurement result, wherein the positioning reference signal is sent by the terminal device on the first resource block in the first allocation mode.

8. A network-side device, comprising:
• a resource block allocation unit (501), configured to: allocate a first resource block;
• a mode determining unit (502), configured to determine a first allocation mode of the first resource block, wherein the first resource block is used to carry a positioning reference signal, the positioning reference signal is used to perform positioning on a terminal device, and the first allocation mode is configuring the positioning reference signal in all unoccupied resource elements of the first resource block; and
• a transceiver unit (503), configured to: send the positioning reference signal on the first resource block in the first allocation mode, or receive the positioning reference signal on the first resource block in the first allocation mode.

9. The network-side device according to claim 8, wherein
the mode determining unit (502) is further configured to: obtain expected positioning quality, and if the expected positioning quality is lower than a preset threshold, determine the first allocation mode of the first resource block; or
the mode determining unit (502) is specifically configured to: obtain a positioning precision requirement, and if the positioning precision requirement is higher than a preset threshold, determine the first allocation mode of the first resource block.

10. The network-side device according to claim 8, wherein
the mode determining unit (502) is further configured to determine the first allocation mode of the first resource block if a time for sending or receiving the positioning reference signal is within a first time segment.

11. The network-side device according to claim 10, wherein
the mode determining unit (502) is further configured to determine the first allocation mode of the first resource block if a frequency for sending or receiving the positioning reference signal is within a first frequency band.

12. The network-side device according to any one of claims 8 to 11, further comprising:
an assistance information generation unit (504), configured to generate assistance information, wherein the assistance information is used to indicate the first allocation mode of the first resource block.

13. The network-side device according to any one of claims 8 to 12, further comprising: a measurement unit (505), configured to obtain a measurement result of the positioning reference signal, wherein the measurement result is used to perform positioning calculation on the terminal device.

14. The network-side device according to claim 13, wherein
the transceiver unit (503) is configured to receive the positioning reference signal on the first resource block in the first allocation mode; and
the measurement unit (505) is further configured to: obtain the positioning reference signal from the transceiver, and perform measurement to obtain the measurement result, wherein the positioning reference signal is sent by the terminal device on the first resource block in the first allocation mode.

15. The network-side device according to claim 13, wherein
the transceiver unit (503) is configured to: send the positioning reference signal on the first resource block in the first allocation mode, and receive the measurement result of the positioning reference signal, wherein the measurement result is obtained by the terminal device by measuring the positioning reference signal that is received on the first resource block in the first allocation mode.

16. A computer-readable storage medium having instruction recorded thereon; wherein the instruction makes a computer implement the method of any one of claims 1 to 7.

## Patentansprüche

1. Ressourcenzuteilungsverfahren, das Folgendes umfasst:
• Zuteilen (S401) eines ersten Ressourcenblocks durch eine netzwerkseitige Vorrichtung, wobei der erste Ressourcenblock verwendet wird, um ein Positionsbestimmungsreferenzsignal zu transportieren, und das Positionsbestimmungsreferenzsignal verwendet wird, um eine Positionsbestimmung an einer Endgerätevorrichtung durchzuführen;
• Bestimmen (S402) eines ersten Zuteilungsmodus des ersten Ressourcenblocks durch die netzwerkseitige Vorrichtung, wobei der erste Zuteilungsmodus das Positionsbestimmungsreferenzsignal in allen nicht belegten Ressourcenelementen des ersten Ressourcenblocks auslegt; und
• Senden (S403) des Positionsbestimmungsreferenzsignals durch die netzwerkseitige Vorrichtung im ersten Ressourcenblock im ersten Zuteilungsmodus oder Empfangen (S403) des Positionsbestimmungsreferenzsignals durch die netzwerkseitige Vorrichtung im ersten Ressourcenblock im ersten Zuteilungsmodus.

2. Verfahren nach Anspruch 1, wobei
das Bestimmen des ersten Zuteilungsmodus des ersten Ressourcenblocks durch die netzwerkseitige Vorrichtung, wobei der erste Zuteilungsmodus das Positionsbestimmungsreferenzsignal in allen nicht belegten Ressourcenelementen des ersten Ressourcenblocks auslegt, Folgendes umfasst:
Erhalten einer erwarteten Positionsbestimmungsqualität durch die netzwerkseitige Vorrichtung und, wenn die erwartete Positionsbestimmungsqualität geringer ist als ein voreingestellter Schwellwert, Bestimmen des ersten Zuteilungsmodus des ersten Ressourcenblocks oder
Erhalten einer Positionsbestimmungspräzisionsanforderung durch die netzwerkseitige Vorrichtung und, wenn die Positionsbestimmungspräzisionsanforderung höher ist als ein voreingestellter Schwellwert, Bestimmen des ersten Zuteilungsmodus des ersten Ressourcenblocks.

3. Verfahren nach Anspruch 1, wobei
das Bestimmen des ersten Zuteilungsmodus des ersten Ressourcenblocks durch die netzwerkseitige Vorrichtung, wobei der erste Zuteilungsmodus das Positionsbestimmungsreferenzsignal in allen nicht belegten Ressourcenelementen des ersten Ressourcenblocks auslegt, Folgendes umfasst:
Bestimmen des ersten Zuteilungsmodus des ersten Ressourcenblocks durch die netzwerkseitige Vorrichtung, wenn die netzwerkseitige Vorrichtung bestimmt, dass eine Zeit zum Senden oder Empfangen des Positionsbestimmungsreferenzsignals in einem ersten Zeitsegment liegt, wobei der erste Zuteilungsmodus das Positionsbestimmungsreferenzsignal in allen nicht belegten Ressourcenelementen des ersten Ressourcenblocks auslegt.

4. Verfahren nach Anspruch 1, wobei
das Bestimmen des ersten Zuteilungsmodus des ersten Ressourcenblocks durch die netzwerkseitige Vorrichtung, wobei der erste Zuteilungsmodus das Positionsbestimmungsreferenzsignal in allen nicht belegten Ressourcenelementen des ersten Ressourcenblocks auslegt, Folgendes umfasst:
Bestimmen des ersten Zuteilungsmodus des ersten Ressourcenblocks durch die netzwerkseitige Vorrichtung, wenn die netzwerkseitige Vorrichtung bestimmt, dass eine Frequenz zum Senden oder Empfangen des Positionsbestimmungsreferenzsignals in einem ersten Frequenzband liegt, wobei der erste Zuteilungsmodus das Positionsbestimmungsreferenzsignal in allen nicht belegten Ressourcenelementen des ersten Ressourcenblocks auslegt.

5. Verfahren nach einem der Ansprüche 1 bis 4, das ferner Folgendes umfasst:
Erzeugen von Unterstützungsinformationen durch die netzwerkseitige Vorrichtung, wobei die Unterstützungsinformationen verwendet werden, um den ersten Zuteilungsmodus des ersten Ressourcenblocks anzuzeigen.

6. Verfahren nach einem der Ansprüche 1 bis 5, das ferner Folgendes umfasst:
Erhalten eines Messergebnisses des Positionsbestimmungsreferenzsignals durch die netzwerkseitige Vorrichtung, wobei das Messergebnis verwendet wird, um eine Positionsbestimmung an der Endgerätevorrichtung durchzuführen.

7. Verfahren nach Anspruch 6, wobei
das Erhalten des Messergebnisses des Positionsbestimmungsreferenzsignals durch die netzwerkseitige Vorrichtung Folgendes umfasst:
Empfangen des Positionsbestimmungsreferenzsignals im ersten Ressourcenblock im ersten Zuteilungsmodus durch die netzwerkseitige Vorrichtung und Messen des Positionsbestimmungsreferenzsignals, um das Messergebnis zu erhalten, wobei das Positionsbestimmungsreferenzsignal von der Endgerätevorrichtung im ersten Ressourcenblock im ersten Zuteilungsmodus gesendet wird.

8. Netzwerkseitige Vorrichtung, die Folgendes umfasst:
• eine Ressourcenblockzuteilungseinheit (501), die zu Folgendem ausgelegt ist: Zuteilen eines ersten Ressourcenblocks;
• eine Modusbestimmungseinheit (502), die dazu ausgelegt ist, einen ersten Zuteilungsmodus des ersten Ressourcenblocks zu bestimmen, wobei der erste Ressourcenblock verwendet wird, um ein Positionsbestimmungsreferenzsignal zu transportieren, das Positionsbestimmungsreferenzsignal verwendet wird, um eine Positionsbestimmung an der Endgerätevorrichtung durchzuführen, und der erste Zuteilungsmodus das Positionsbestimmungsreferenzsignal in allen nicht belegten Ressourcenelementen des ersten Ressourcenblocks auslegt; und
• eine Sendeempfängereinheit (503), die zu Folgendem ausgelegt ist: Senden des Positionsbestimmungsreferenzsignals im ersten Ressourcenblock im ersten Zuteilungsmodus oder Empfangen des Positionsbestimmungsreferenzsignals im ersten Ressourcenblock im ersten Zuteilungsmodus.

9. Netzwerkseitige Vorrichtung nach Anspruch 8, wobei
die Modusbestimmungseinheit (502) ferner zu Folgendem ausgelegt ist: Erhalten einer erwarteten Positionsbestimmungsqualität und, wenn die erwartete Positionsbestimmungsqualität geringer ist als ein voreingestellter Schwellwert, Bestimmen des ersten Zuteilungsmodus des ersten Ressourcenblocks oder
die Modusbestimmungseinheit (502) speziell zu Folgendem ausgelegt ist: Erhalten einer Positionsbestimmungspräzisionsanforderung und, wenn die Positionsbestimmungspräzisionsanforderung höher ist als ein voreingestellter Schwellwert, Bestimmen des ersten Zuteilungsmodus des ersten Ressourcenblocks.

10. Netzwerkseitige Vorrichtung nach Anspruch 8, wobei
die Modusbestimmungseinheit (502) ferner dazu ausgelegt ist, den ersten Zuteilungsmodus des ersten Ressourcenblocks zu bestimmen, wenn eine Zeit zum Senden oder Empfangen des Positionsbestimmungsreferenzsignals in einem ersten Zeitsegment liegt.

11. Netzwerkseitige Vorrichtung nach Anspruch 10, wobei
die Modusbestimmungseinheit (502) ferner dazu ausgelegt ist, den ersten Zuteilungsmodus des ersten Ressourcenblocks zu bestimmen, wenn eine Frequenz zum Senden oder Empfangen des Positionsbestimmungsreferenzsignals in einem ersten Frequenzband liegt.

12. Netzwerkseitige Vorrichtung nach einem der Ansprüche 8 bis 11, die ferner Folgendes umfasst:
eine Unterstützungsinformationserzeugungseinheit (504), die dazu ausgelegt ist, Unterstützungsinformationen zu erzeugen, wobei die Unterstützungsinformationen verwendet werden, um den ersten Zuteilungsmodus des ersten Ressourcenblocks anzuzeigen.

13. Netzwerkseitige Vorrichtung nach einem der Ansprüche 8 bis 12, die ferner Folgendes umfasst:
eine Messeinheit (505), die dazu ausgelegt ist, ein Messergebnis des Positionsbestimmungsreferenzsignals zu erhalten, wobei das Messergebnis verwendet wird, um eine Positionsbestimmungsberechnung an der Endgerätevorrichtung durchzuführen.

14. Netzwerkseitige Vorrichtung nach Anspruch 13, wobei
die Sendeempfängereinheit (503) dazu ausgelegt ist, das Positionsbestimmungsreferenzsignal im ersten Ressourcenblock im ersten Zuteilungsmodus zu empfangen; und
die Messeinheit (505) ferner zu Folgendem ausgelegt ist: Erhalten des Positionsbestimmungsreferenzsignals vom Sendeempfänger und Durchführen einer Messung, um das Messergebnis zu erhalten, wobei das Positionsbestimmungsreferenzsignal von der Endgerätevorrichtung im ersten Ressourcenblock im ersten Zuteilungsmodus gesendet wird.

15. Netzwerkseitige Vorrichtung nach Anspruch 13, wobei
die Sendeempfängereinheit (503) zu Folgendem ausgelegt ist: Senden des Positionsbestimmungsreferenzsignals im ersten Ressourcenblock im ersten Zuteilungsmodus und Empfangen des Messergebnisses des Positionsbestimmungsreferenzsignals, wobei das Messergebnis durch Messen des Positionsbestimmungsreferenzsignals, das im ersten Ressourcenblock im ersten Zuteilungsmodus empfangen wird, von der Endgerätevorrichtung erhalten wird.

16. Computerlesbares Speichermedium, auf dem eine Anweisung aufgezeichnet ist, wobei die Anweisung einen Computer veranlasst, das Verfahren nach einem der Ansprüche 1 bis 7 zu implementieren.

## Revendications

1. Procédé d'attribution de ressource, comprenant :
l'attribution (S401), par un dispositif côté réseau, d'un premier bloc de ressource, le premier bloc de ressource étant utilisé pour transporter un signal de référence de positionnement, et le signal de référence de positionnement étant utilisé pour réaliser un positionnement sur un dispositif de terminal ;
la détermination (S402), par le dispositif côté réseau, d'un premier mode d'attribution du premier bloc de ressource, le premier mode d'attribution configurant le signal de référence de positionnement dans tous les éléments de ressource inoccupés du premier bloc de ressource ; et
l'envoi (S403), par le dispositif côté réseau, du signal de référence de positionnement sur le premier bloc de ressource dans le premier mode d'attribution, ou la réception (S403), par le dispositif côté réseau, du signal de référence de positionnement sur le premier bloc de ressource dans le premier mode d'attribution.

2. Procédé selon la revendication 1,
la détermination, par le dispositif côté réseau, du premier mode d'attribution du premier bloc de ressource, le premier mode d'attribution configurant le signal de référence de positionnement dans tous les éléments de ressource inoccupés du premier bloc de ressource comprenant :
l'obtention, par le dispositif côté réseau, d'une qualité de positionnement attendue, et si la qualité de positionnement attendue est inférieure à un seuil prédéfini, la détermination du premier mode d'attribution du premier bloc de ressource ; ou
l'obtention, par le dispositif côté réseau, d'une exigence de précision de positionnement, et si l'exigence de précision de positionnement est supérieure à un seuil prédéfini, la détermination du premier mode d'attribution du premier bloc de ressource.

3. Procédé selon la revendication 1,
la détermination, par le dispositif côté réseau, du premier mode d'attribution du premier bloc de ressource, le premier mode d'attribution configurant le signal de référence de positionnement dans tous les éléments de ressource inoccupés du premier bloc de ressource comprenant :
la détermination, par le dispositif côté réseau, du premier mode d'attribution du premier bloc de ressource si le dispositif côté réseau détermine qu'un temps pour l'envoi ou la réception du signal de référence de positionnement est dans un premier intervalle de temps, le premier mode d'attribution configurant le signal de référence de positionnement dans tous les éléments de ressource inoccupés du premier bloc de ressource.

4. Procédé selon la revendication 1,
la détermination, par le dispositif côté réseau, du premier mode d'attribution du premier bloc de ressource, le premier mode d'attribution configurant le signal de référence de positionnement dans tous les éléments de ressource inoccupés du premier bloc de ressource comprenant :
la détermination, par le dispositif côté réseau, du premier mode d'attribution du premier bloc de ressource si le dispositif côté réseau détermine qu'une fréquence pour l'envoi ou la réception du signal de référence de positionnement est dans une première bande de fréquences, le premier mode d'attribution configurant le signal de référence de positionnement dans tous les éléments de ressource inoccupés du premier bloc de ressource.

5. Procédé selon l'une quelconque des revendications 1 à 4, comprenant en outre :
la génération, par le dispositif côté réseau, d'informations d'assistance, les informations d'assistance étant utilisées pour indiquer le premier mode d'attribution du premier bloc de ressource.

6. Procédé selon l'une quelconque des revendications 1 à 5, comprenant en outre : l'obtention, par le dispositif côté réseau, d'un résultat de mesure du signal de référence de positionnement, le résultat de mesure étant utilisé pour réaliser le positionnement sur le dispositif de terminal.

7. Procédé selon la revendication 6,
l'obtention, par le dispositif côté réseau, du résultat de mesure du signal de référence de positionnement comprenant :
la réception, par le dispositif côté réseau, du signal de référence de positionnement sur le premier bloc de ressource dans le premier mode d'attribution, et la mesure du signal de référence de positionnement pour obtenir le résultat de mesure, le signal de référence de positionnement étant envoyé par le dispositif de terminal sur le premier bloc de ressource dans le premier mode d'attribution.

8. Dispositif côté réseau, comprenant :
une unité d'attribution de bloc de ressource (501), configurée pour : attribuer un premier bloc de ressource ;
une unité de détermination de mode (502), configurée pour déterminer un premier mode d'attribution du premier bloc de ressource, le premier bloc de ressource étant utilisé pour transporter un signal de référence de positionnement, le signal de référence de positionnement étant utilisé pour réaliser le positionnement sur un dispositif de terminal, et le premier mode d'attribution configurant le signal de référence de positionnement dans tous les éléments de ressource inoccupés du premier bloc de ressource ; et
une unité émettrice-réceptrice (503), configurée pour : envoyer le signal de référence de positionnement sur le premier bloc de ressource dans le premier mode d'attribution, ou recevoir le signal de référence de positionnement sur le premier bloc de ressource dans le premier mode d'attribution.

9. Dispositif côté réseau selon la revendication 8,
l'unité de détermination de mode (502) étant en outre configurée pour : obtenir la qualité de positionnement attendue, et si la qualité de positionnement attendue est inférieure à un seuil prédéfini, déterminer le premier mode d'attribution du premier bloc de ressource ; ou
l'unité de détermination de mode (502) étant spécifiquement configurée pour : obtenir une exigence de précision de positionnement, et si l'exigence de précision de positionnement est supérieure à un seuil prédéfini, déterminer le premier mode d'attribution du premier bloc de ressource.

10. Dispositif côté réseau selon la revendication 8,
l'unité de détermination de mode (502) étant en outre configurée pour déterminer le premier mode d'attribution du premier bloc de ressource si un temps pour l'envoi ou la réception du signal de référence de positionnement est dans un premier intervalle de temps.

11. Dispositif côté réseau selon la revendication 10,
l'unité de détermination de mode (502) étant en outre configurée pour déterminer le premier mode d'attribution du premier bloc de ressource si une fréquence pour l'envoi ou la réception du signal de référence de positionnement est dans une première bande de fréquences.

12. Dispositif côté réseau selon l'une quelconque des revendications 8 à 11, comprenant en outre :
une unité de génération d'informations d'assistance (504), configurée pour générer des informations d'assistance, les informations d'assistance étant utilisées pour indiquer le premier mode d'attribution du premier bloc de ressource.

13. Dispositif côté réseau selon l'une quelconque des revendications 8 à 12, comprenant en outre :
une unité de mesure (505), configurée pour obtenir un résultat de mesure du signal de référence de positionnement, le résultat de mesure étant utilisé pour réaliser un calcul de positionnement sur le dispositif de terminal.

14. Dispositif côté réseau selon la revendication 13,
l'unité émettrice-réceptrice (503) étant configurée pour recevoir le signal de référence de positionnement sur le premier bloc de ressource dans le premier mode d'attribution ; et
l'unité de mesure (505) étant en outre configurée pour : obtenir le signal de référence de positionnement provenant de l'émetteur-récepteur, et réaliser une mesure pour obtenir le résultat de mesure, le signal de référence de positionnement étant envoyé par le dispositif de terminal sur le premier bloc de ressource dans le premier mode d'attribution.

15. Dispositif côté réseau selon la revendication 13,
l'unité émettrice-réceptrice (503) étant configurée pour : envoyer le signal de référence de positionnement sur le premier bloc de ressource dans le premier mode d'attribution, et recevoir le résultat de mesure du signal de référence de positionnement, le résultat de mesure étant obtenu par le dispositif de terminal en mesurant le signal de référence de positionnement qui est reçu sur le premier bloc de ressource dans le premier mode d'attribution.

16. Support de stockage lisible par ordinateur sur lequel est enregistrée une instruction ;
l'instruction faisant qu'un ordinateur met en œuvre le procédé selon l'une quelconque des revendications 1 à 7.
